Europäisches Patentamt

European Patent Office

Office européen des brevets

(19)

(11) **EP 1 380 973 A1**

(12) **EUROPEAN PATENT APPLICATION**
published in accordance with Art. 158(3) EPC

(43) Date of publication:
**14.01.2004 Bulletin 2004/03**

(21) Application number: **01275143.4**

(22) Date of filing: **17.12.2001**

(51) Int Cl.⁷: **G06F 17/60**

(86) International application number:
**PCT/JP2001/011071**

(87) International publication number:
**WO 2003/065259 (07.08.2003 Gazette 2003/32)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **18.12.2000 JP 2000383687**

(71) Applicant: **Nishio, Norihito
Yokohama-shi, Kanagawa 230-0074 (JP)**

(72) Inventor: **Nishio, Norihito
Yokohama-shi, Kanagawa 230-0074 (JP)**

(74) Representative: **Loven, Keith James
Loven & Co
Quantum House
30 Tentercroft Street
Lincoln LN5 7DB (GB)**

(54) **POINT SYSTEM**

(57) Affiliation groups comprising a plurality of customers are provided, and discount information, such as discount rates, are established in advance based on the purchasing performance of the affiliation groups and the like, or discount rates or the like are varied according to variations in purchasing performance, and points are calculated.

A point system wherein, a card or another information storage medium for storing customer information and point information is used, and when this is used, the information is read using an information reading means, a sum total of points is rerecorded according to a monetary purchase amount, and the data stored on the storage medium is tabulated and used for display or printing so that the information can be used as necessary in various sales services, and wherein customer information comprising information for individual single customers and information for individual affiliation groups, comprising a plurality of customers, and discount information, established for individual stores or products and for individual affiliation groups, is stored on a server system provided on a computer network connected to the information reading means, and when the information is read by the information reading means, points are calculated according to discount information established for individual stores or products and individual affiliation groups.

FIG. 1

## Description

TECHNICAL FIELD

The present invention relates to a system for processing according to consumer grouping, in situations where an information storage medium, such as a card, is used when a product or the like is sold, and points are awarded to the consumer.

The present invention further relates to a system provided on a computer network to which computers or portable terminals are connected, which is a system wherein a seller recruits customers as members and forms a group, whereby the members will have an increased price discount on products or the like that are sold, and wherein the discount for individual members is set according to the size of the group or the sales totals.

BACKGROUND ART

Conventionally, point card systems are widely used for sales promotions, wherein benefits, such as gifts or discounts, are given to consumers by vendors of various products and the like, at point totals corresponding to monetary sales amounts. When such systems are used, magnetic cards are usually issued, to which points are input according to monetary sales amounts, and when a specific number of points is reached, various benefits are given.

For example, in JP-05-266359-A "Product Sales Data Processing Device," technology is disclosed wherein discount processing is allowed for a discountable product only when the sales total for a preselected discount-stipulated product is greater than a reference total.

Accordingly, a flag is set in a product table for preselected discountable products, and discount amounts are set. When sales are recorded for a transaction, the total purchase amount for the discount-stipulated product is calculated by a stipulated product counter. Then, if this purchase amount is above a reference amount, and the discountable product is recorded in the sales registry, discount processing is applied for the discount portion of the discountable product so as to calculate the amount due.

Furthermore, in the art of JP-06-084025-A, "Point Card Processor," distinctions are made in terms of the points given to customers, and the number of points remaining until a point goal is achieved is brought to the attention of the customer by printing it.

Alternatively, in JP-07-129678-A, "Sales Promotion Point Card System," in a point processing method, the number of points corresponding to a monetary sales amount is totaled with the points received in a lottery, and the total number of points is input to a magnetic card, which is then issued.

But in the conventional point card systems as described above, points were input to a magnetic card and recorded according to the monetary sales amount, and the data was only read and displayed when necessary, and since consumers search for low-priced stores for commercial transactions, it was difficult for the stores to get steady customers.

Meanwhile, the stores were forced to compete for customers and engage in price wars. In this case, as sales figures and going prices varied depending on the behavior of other stores and of consumers, it was difficult to estimate sales totals and make business plans.

In recent years, the development of computer networks and communication environments has been accompanied by business developments, such as sales activities conducted primarily over the Internet. There are many sites, such as for shopping malls and auctions on the Internet; and many technologies, such as payment methods, have been developed to accompany this.

Furthermore, in addition to such information equipment as personal computers, such information appliances as PDAs, cellular telephones, PHS, internet TV, and game consoles are becoming popular. Cellular telephones include those with built-in browser functions, and it is possible to browse internet web pages from PDAs.

Such a flourishing of electronic transactions means that, as with conventional stores, consumers also search for electronic stores with low prices for online transactions, and it is difficult for the stores to get steady customers. In particular, this trend is pronounced for the Internet and the like, as users (consumers) can search large amounts of information.

Meanwhile, for stores that engage in electronic transactions, there is competition to attract clients, and price wars are inevitable. In this case, as sales figures and going prices vary depending on the behavior of other stores and of consumers, it is difficult to estimate sales totals and make business plans.

In terms of art directed at solving such problems, in the same manner as for conventional stores, coupons are issued for discounts at electronic transaction sites using the internet, and points are given to consumers in accordance with their total purchases.

Furthermore, systems are being put in place, such as those wherein the price is lowered in the case of large quantity purchases of specific products or of group-buying by large numbers of consumers.

However, with these simple methods, while these are effective for laying-in large quantities of a specific product, or when a large number of people buy a specific product together, they are temporary, and have no lasting merit for the consumer.

Furthermore, for purposes of profit management, the store must calculate the price reduction for each transaction.

Furthermore, JP-2001-520425-T, "Sales Point System and Group Incentive Management System," discloses a method and device for management of a group incentive program, wherein a group of consumers is registered as a purchasing group with a merchant. According to this invention, a group purchases a minimum amount of a product or service from that merchant in order to obtain a group advantage. If the group reaches a specific minimum purchasing target set by the merchant, they are entitled to receive the incentive. The minimum purchasing target can be set by methods such as those based on: the average purchases of the entire group; the average purchases of each group member; the individual purchases of each group member, or the like. The minimum purchasing target can be limited to a specific period of time. The group purchases are monitored through the merchant's sales-point terminal network. Thus, the group members increase each other's desire to purchase, so as to purchase the appropriate amount from the merchant and receive the benefit. This group behavior increases the merchant's sales.

However, this invention takes the form of a group purchase or common purchase at a specific store. It consists of giving a benefit to a group in accordance with the purchases of a common purchasing group, and thus discounts and the like are not made available for purchases at a plurality of outlets or enterprises. Moreover, the benefit is only given to the group for group purchases, and discounts are not awarded to the individual customers who make up the group according to their actual purchases, nor does it support setups wherein there are further subgroups of group members. Stated simply, giving benefits to a group for group purchases is simply replacing the individual with the group in a simple discount scheme that amounts to the same thing as an ordinary discount to an individual.

Furthermore, while applying this to a plurality of outlets or the like allows for the development of customer service based on alliances between businesses, as it is necessary to reliably maintain profit at the various outlets or the like when the discount rate or the like is calculated, there is a need for a system that supports this.

Here, in order to solve the aforementioned problems, an object of the present invention is to provide a point system wherein, by providing an affiliation group comprising a plurality of customers and establishing discount information that is set for each affiliation group, discount information, such as discount rates, can be established in advance based on the purchasing performance of the affiliation group, or the discount rates can be further changed in accordance with changes in purchasing performance, allowing points to be calculated according to discount information.

Furthermore, by adopting a system in which points are accumulated, not only does this have the advantage, from the point of view of the consumer, of producing discounts and the like, but as the operation is such that points cannot be used until a fixed amount has been accumulated, this has the advantage of being advantageous to the store in terms of cash flow and the like.

Furthermore, as the present invention allows for setting and varying discount rates so as to maintain the profit ratio of outlets and enterprises, while with conventional sales promotions it was only possible to make predictions, such as: If we discount by this much, we are likely to increase sales by that much, and thus there was a possibility that profits would not ultimately be increased; with the present invention, discounts are made while maintaining profit, so that profits are always increased.

DISCLOSURE OF THE INVENTION

In order to solve the problems described above, the invention as recited in claim 1 is characterized in that this is a point system wherein a card or another information storage medium for storing customer information and point information is used, and when this is used, the information is read using an information reading means, a sum total of points is rerecorded according to a monetary purchase amount, and the data stored on the storage medium is tabulated and used for display or printing so that the information can be used as necessary in various sales services, the point system being characterized in that:

> customer information comprising information for individual single customers and information for individual affiliation groups comprising a plurality of customers; and
> discount information established for individual stores or products and for individual affiliation groups
> are stored on a server system provided on a computer network connected to the information reading means; and
> when the information is read by the information reading means, points are calculated according to the discount information established for individual stores or products and individual affiliation groups.

Furthermore, in order to solve the problems described above, the invention as recited in claim 2 is characterized in that this is the point system of claim 1, characterized in that, in the invention recited in claim 1,
the point information is stored in the server system, in addition to the card or other information storage medium.

Furthermore, in order to solve the problems described above, the invention as recited in claim 3 is characterized in that this is a point system wherein, when customer information is sent over a computer network from a customer terminal and used in an electronic commercial transaction, information stored on a server system that manages customer information, and point information is read, a sum total of points is rerecorded according to a monetary purchase amount, and the data stored on the storage medium is tabulated and used for display or printing so that the information can be used as necessary in various sales services, the point system being characterized in that:

customer information comprising information for individual single customers and information for individual affiliation groups comprising a plurality of customers; and
discount information established for individual stores or products and for individual affiliation groups
are stored on the server system; and
when the information is read by an information reading means, points are calculated according to discount information established for individual stores or products and individual affiliation groups.

Furthermore, in order to solve the problems described above, the invention as recited in claim 4 is characterized in that this is the point system of any one of claims 1-3, characterized in that, in the invention as recited in claims 1-3:

within the customer information, the information for individual affiliation groups comprising a plurality of customers comprises information for individual subgroups comprising members of the affiliation group; and
when the information is read by the information reading means, points are calculated according to discount information established for individual stores or products and individual affiliation groups/ affiliation subgroups.

Furthermore, in order to solve the problems described above, the invention as recited in claim 5 is characterized in that this is the point system of any one of claims 1-4, characterized in that, in the invention as recited in claims 1-4:

processing that calculates the points according to the discount information established for individual affiliation groups/affiliation subgroups is such that:

when points are added, calculations are performed for point addition, referencing discount information established for individual affiliation groups stored on the server system, and a sum total of points is rerecorded according to the monetary purchase amount.

Furthermore, in order to solve the problems described above, the invention as recited in claim 6 is characterized in that this is the point system of any one of claims 1-5, characterized in that, in the invention as recited in claims 1-5:

processing that calculates the points according to the discount information established for individual affiliation groups/affiliation subgroups is such that:

when points are used to make purchases or the like, a discount on the number of points used is calculated referencing the customer information and the discount information established for individual affiliation groups stored on the server system, and a sum total of points is rerecorded according to the monetary purchase amount.

Furthermore, in order to solve the problems described above, the invention as recited in claim 7 is characterized in that this is the point system of any one of claims 1-6, characterized in that, in the invention as recited in claims 1-6:

the information stored on the server system comprises ranking information for individual customers within the affiliation group or within the affiliation subgroup.

Furthermore, in order to solve the problems described above, the invention as recited in claim 8 is characterized in that this is the point system of any one of claims 1-7, characterized in that, in the invention as recited in claims 1-7:

the information stored on the server system comprises discount information established for individual point acquisition periods or point usage periods.

Furthermore, in order to solve the problems described above, the invention as recited in claim 9 is characterized in that this is the point system of any one of claims 1-8, characterized in that, in the invention as recited in claims 1-8:

the points comprise normal points added when purchases or the like are made and stock points that can be purchased in exchange for money or the like.

Furthermore, in order to solve the problems described above, the invention as recited in claim 10 is characterized in that this is the point system of any one of claims 1-9, characterized in that, in the invention as recited in claims 1-9:

interest points are added to the points according to a period of time over which points are held, the number of points held or the like.

Furthermore, in order to solve the problems described above, the invention as recited in claim 11 is characterized in that this is the point system of any one of claims 1-10, characterized in that, in the invention as recited in claims 1-10:

the points can be added or used at a plurality of stores using the point system of the present invention.

Furthermore, in order to solve the problems described above, the invention as recited in claim 12 is characterized in that this is the point system of any one of claims 1-11, characterized in that, in the invention as recited in claims 1-11:

the customer information, comprising information for individual single customers and information for individual affiliation groups/affiliation subgroups, comprising a plurality of customers, is stored on a storage medium held by the customer.

Furthermore, in order to solve the problems described above, the invention as recited in claim 13 is characterized in that this is the point system of any one of claims 1-12, characterized in that, in the invention as recited in claims 1-12:

the storage medium is a magnetic card.

Furthermore in order to solve the problems described above, the invention as recited in claim 14 is characterized in that this is the point system of any one of claims 1-13, characterized in that, in the invention as recited in claims 3-13:

the storage medium is a authentication means provided in the customer terminal when the customer information is sent over the computer network from the customer terminal to utilize an electronic commercial transaction.

According to a system using a point card or another information storage medium, which is represented by the invention as recited in claim 1, when purchases or the like are paid for at an actual store or the like, the data on the point card is first read, a number of points is calculated according to a monetary amount, and the data for the sum total number of points is updated, and point calculation processing is performed for each affiliation group, which is the primary characteristic of the present invention.

Furthermore, according to a system using transmission and reception of information over a computer network, which is represented by the invention as recited in claim 3, when an electronic commercial translation or the like is paid for, the point data is first read, a number of points is calculated according to a monetary amount, and the data for the sum total number of points is updated, and point calculation processing is performed for each affiliation group, which is the primary characteristic of the present invention.

BRIEF DESCRIPTION OF THE DRAWINGS

FIG. 1 is a system diagram illustrating the basic structure of a system according to the present invention.

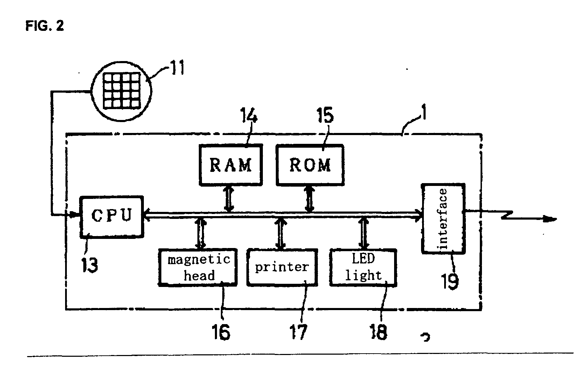

FIG. 2 is block diagram illustrating an electrical circuit for the information reading means 10.
FIG. 3 is a flow chart illustrating a mode of embodiment of the present invention.
FIG. 4 is a flow chart illustrating a mode of embodiment of the present invention.
FIG. 5 is a data structure diagram illustrating one example of a table for customer affiliation groups.
F!G. 6 is a data structure diagram illustrating one example of a table for affiliation group discount rates.
FIG. 7 is a data structure diagram illustrating one example of a table for discount rates by store.
FIG. 8 is a diagram of a data structure for storing data for adjustment of discount rates and the like in point calculations based on rank within the group.
FIG. 9 is a diagram illustrating data formats stored on a server system for the purpose of calculating discount rates (award rates) according to group purchasing performance and individual purchasing performance, and an example of a calculation of discount rates (award rates) using these.
FIG. 10 is a diagram illustrating an example of standards for calculating ranking based on the number of people in an affiliation group.
FIG. 11 is a diagram illustrating an example of a calculation of the award rate for discounts and the like as a base index according to ranking.
FIG. 12 is a diagram illustrating an example of a calculation of award rates for discounts and the like, wherein the ranking is calculated according to the relationship between the number of people in each affiliation group, the average sales totals for each group, and the individual performance within the group.
FIG. 13 is a diagram illustrating an example of the discount rate applied for allied outlets and the like.

In the figures, 1 indicates a browser terminal, 2 indicates a browser terminal, 3 indicates an Internet network; 4 indicates a web server; 5 indicates a database server, 6 indicates an application server; 7 indicates a mail server; 10 indicates an information reading means; and 15 indicates an information storage medium.

BEST MODE FOR CARRYING OUT THE INVENTION

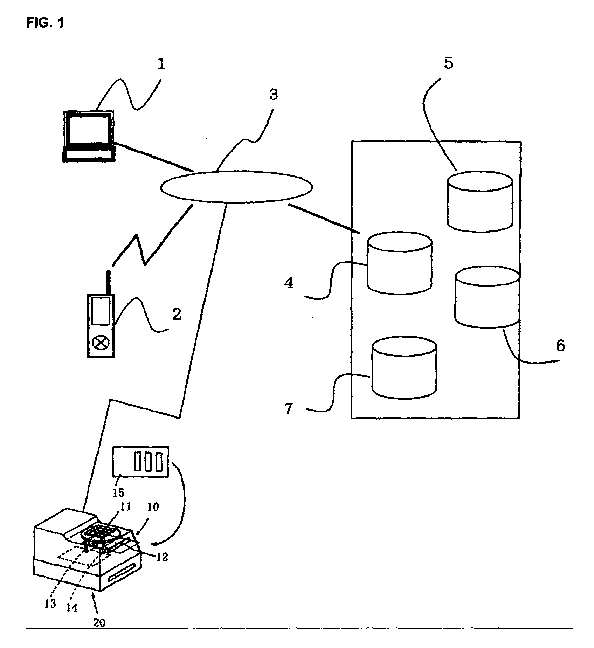

FIG. 1 is a system diagram illustrating the basic structure of a system according to the present invention.
Note that, while FIG. 1 is representative of the basic system and structure, it is only one example of the system structure of the present invention, which is not limited thereby.

The basic hardware structure of the system of the present invention comprises a database server, an authentication server, and an application server; a web server and a mail server may be provided as necessary; the various servers may be made redundant as necessary so as to ensure safety. Alternatively, any one of the authentication server, the application server, or the database server may be located in a separate location, or each of these may be located in separate locations, or they may all be located in the same location.

The system of the present invention is such that, according to the system using a point card or another information storage medium, which is represented by the invention as recited in claim 1, a system is implemented having an authentication server, an application server, a database server, and the like on a network to which computers, hand-held terminals, and the like, are connected.

However, so long as the same functions are realized, the various servers mentioned above may, for example, be provided by one computer terminal.

By virtue of a system using information transmission and reception over a computer network, which is representative of the invention as recited in claim 3, user terminals 1 and 2 can be used to connect to a network, which is typically the Internet. The user terminals 1 and 2 for connecting to the network include any type of computer terminal, such as, not only terminal 1, which is a computer terminal or the like, but also cellular telephones, PHSs, and such wireless communication terminals 2, as well as hand-held terminals including these functions. Furthermore, these may also be so-called information appliances, such as electrical appliances that incorporate computers, such as game consoles, televisions, and the like.

Note that the user is not limited to individual consumers, and electronic commercial transactions or business transactions may be made by an organization, such as a legal entity.

Next, according to the system using a point card or another information storage medium, which is represented by the invention as recited in claim 1, this is provided with a means for reading information 10 as shown in FIG. 1.

10 is an information reading means, such as an information storage medium (point card or the like) processor for the purpose of reading the customer information on an information storage medium from a point card, or other information storage medium 15 comprising a magnetic card or the like, calculating points and rerecording the sum total points. 20 is a unit for storing the customer information data read from the information storage medium and the sum total points.

Note that, while the magnetic card is shown here as an example of an information storage medium, various storage media can be used, such as IC cards, various memory cards, and the like.

FIG, 2 shows a block diagram of an electrical circuit for the information reading means 10 in the customer information processing device described above. The information reading means 10 comprises a microcomputer having an independent CPU 13, and is provided with a RAM 14, a ROM 15, a magnetic head 16, a printer 17, an LED light 18, and an interface 19, as shown in the figure.

The magnetic head 16 serves to read magnetic data on the point card or other information storage medium 15 and rerecords the sum total points after point calculations. Furthermore, a printer 17 can be provided in the information reading means, in this case, the printer serves, for example, to print to the point card.

An interface 19 of the information reading means 10 is connected so that, after processing in which various information is read from the information storage medium 15, monetary amounts are input from a keyboard 11, and the results of point calculations based on these monetary amounts are indicated on the information storage medium 15; this information can be sent to the server system from the I/O interface over a computer network in order to store information on the server system.

Furthermore, the information reading means 10 is normally installed in a store or the like, but in cases such as distance selling, it is possible that this not be present in an actual outlet. In such a case, the same data may be input by information reading means, including input devices, such as keyboards at the distance selling business, and this may be stored in the server system, so that data may be processed and administered.

A server system having the constitution described above can be used to improve service by processing and administration in the following manner.

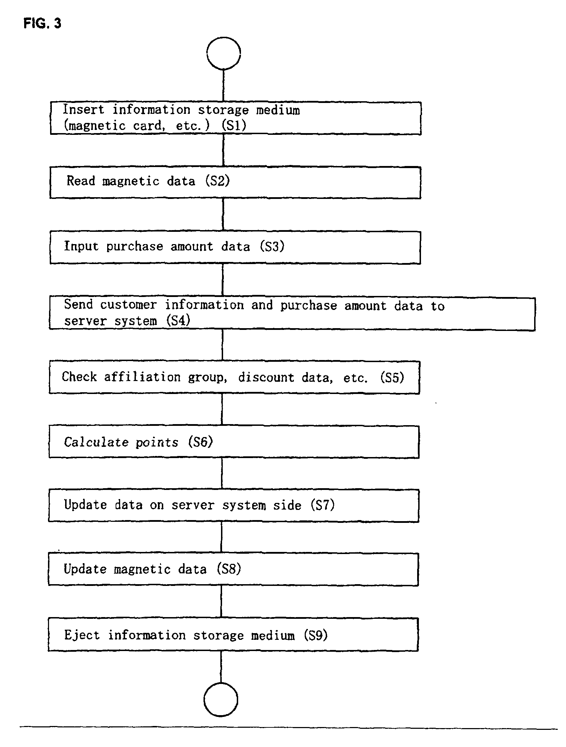

FIG. 3 is a flow chart that describes processing operations for a point card or other information storage medium 15 by means of the information reading means 10 and the server system, in the system using a point card or another information storage medium, which is represented by the invention as recited in claim 1. According to this flow chart, before the information storage medium 15 is processed, the information storage medium 15 is issued by a card issuer.

On the information storage medium 15, that is issued by the card issuer, is stored information, such as a customer number, which is issued sequentially, point data, which is a sum total of zero points (or, in the case of stock points which can be purchased for money or the like, as recited in claim 9, that point data), and the customer ID, which identifies the customer, and the like. Furthermore, it is preferable that magnetic data, such as a safety code, be provided so as to prevent falsification of the information storage medium 15 or confusion with those used in other outlets if the use thereof is to be limited to a specific outlet

Furthermore, in the server system described above, the following data may, for example, be recorded when the storage medium is issued.

Firstly, the customers basic information and the current point balance are recorded; a customer ID, a customer name, and the point balance are stored in a table for customer information.

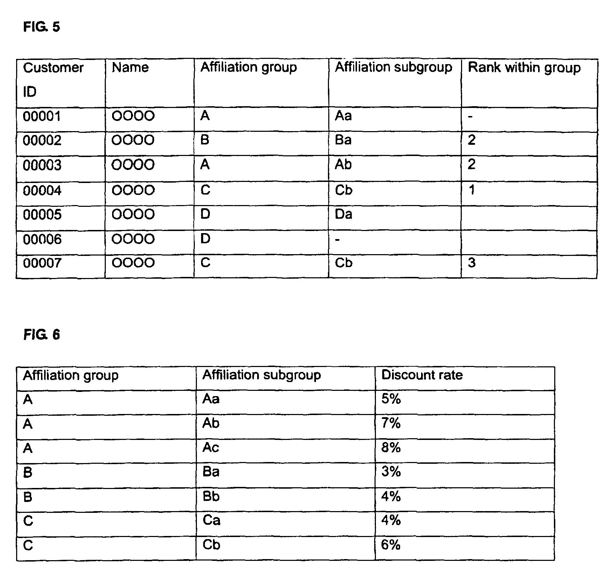

Next, as shown in the table for customer affiliation groups in FIG. 5, affiliation groups, data for a subgroup, if there is one, and data for a rank within the group, if there is one, is associated with the customer ID.

In terms of the storage method for the table for customer affiliation groups, a plurality of customer affiliation groups can be established and stored, so that a given customer may be affiliated with a plurality of groups. A plurality of group databases are provided so that discounts can be applied based on the characteristics of the various groups. Furthermore, the discount rates applied to the various groups can be applied in combination, so as to be a benefit in the discount rates. For example, a first group is a group related by introduction; the customers who are related by introduction form a group, and a discount rate is applied according to the number of people and the sales totals. This is an effective group for promoting introduction on the part of customers. A second group is a group in which customers having the same sales figures are gathered; this is established as a separate group from the group related by introduction; in this affiliation group, the discount rate varies according to the rank of their sales total within the group. If their rank rises to a specific level, their affiliation can be changed to a group having a higher sales total. The third group is a category-based group; for example, this can be established so that the discount rate on food products is increased for customers who purchase large amounts of food products, and the discount rate for clothes is increased for customers who purchase large quantities of clothes.

One example of establishing and varying the discount rate by categories is that, wherein a discount rate is increased for a product or a product category depending on the amount spent at an outlet, customers who spend a lot are given preferential treatment so as to create an incentive for high product purchases by customers who do not spend much. For example, the discount rate for jewelry purchases is increased for customers who often had large sales totals in the past; inversely the discount rate can be increased for LCD television purchases for customers who rarely had high purchase totals in the past.

Preferably, customers can freely choose whether to be affiliated with these groups or not.

Next are the discount rates, which are set for individual affiliation groups and affiliation subgroups, as shown in the table for discount rates by affiliation group in FIG. 6.

Data, such as the discount rate, is established according to the size and the purchasing performance of affiliation groups, which are formed by such means as recruiting of members to groups having high discount rates by stores and the like; the discount rate varies and is set dynamically, according to variations in purchasing performance. Furthermore, it is possible to form subgroups within the groups. Furthermore, people who have become members can form new groups.

When groups or subgroups are formed, using the system of the present invention, if members all belong to a primary membership group, and new members who are recruited by way of introduction by an already subscribing primary member are secondary members, by expanding the introductory relationships, primary members, secondary members, third-level members, etc., are created, and discount rates can be set in accordance with elements, such as sales totals and the like. It is possible to give bonuses, such as discount rates or discount amounts, when members of high-level groups, such as primary members, achieve predetermined levels for such things as group sales totals or number of people introduced.

Note that, in terms of storage of data relating to group formation and affiliation groups in the table for customer affiliation groups, methods can be used wherein the customer selects the group at the store or the like, and data is sent to and recorded on the server system from a terminal provided at a store or the like; or wherein the customer sends data from a terminal directly to the server system for storage by way of the Internet or the like; or wherein the data is input and stored by the server system administrator; or combinations of these methods can be used.

As a variation on the group formation method, the members of legal entities, such as already existing companies, clubs, schools, or various other existing groups, can form groups directly, and this data can be stored in the server system. Furthermore, in addition to forming affiliation groups directly from various existing groups, it is possible to form an affiliation group by combining a plurality of groups, such as in the case where a company A and a school B form a group; alternatively, a single affiliation group can be formed from a company A and many individual customers.

Furthermore, if already subscribing customers, who have formed a group, have people that they would like to add to the group, various responses are possible, such as those wherein these people are accepted directly, without conditions, or wherein only people. who meet certain conditions are accepted, or wherein whether or not to accept these people is determined on a case-by-case basis.

Next, with regard to the calculation of purchasing performance in cases where discount rates are established according to size and purchasing performance, this can be calculated based on the purchasing performance over a predetermined period of time, such as one month or three months.

Furthermore, this can be calculated based on the sum total purchasing performance over a long period of time, or without defining a time period.

Furthermore, the calculations may be made for each store, for example, using a calculation based on purchasing performance over the last 3 months for a store A and a calculation based on the total cumulative purchasing performance at a store B; in these cases the setting data is stored on the server system.

Alternatively, various different settings are possible, such as setting the discount rate based on the sum total purchasing performance, while at the same store A uses purchasing performance calculated for a promotional campaign period.

Furthermore, various different settings are possible, such as, at the same store A, calculating the purchasing performance over a long period of time (for example, 1 year) and calculating the purchasing performance over a short period of time (for example, 1 month) and calculating the total purchasing performance using both at the same time, so as to establish the discount rate, while also using the purchasing performance calculated for a promotional campaign period and the like.

Next various modes can be used, as described below, for changes in the discount rate for time and time-period units.

A first example is that of varying the discount rate in response to changes in the frequency of visits at certain times or over a time period. For example, this includes settings, such as those wherein, if a purchase is made at a time when few customers are present, the discount rate is raised, and the discount rate is changed for times at which the number of customers visiting greatly increases.

Furthermore, changes may be made to the discount rate at certain times or over a time period for each affiliation group, affiliation subgroup, or a member thereof. Service points are added or special discount bargain sales are held for any group or individual customer. By doing this successively throughout the year for each affiliation group, affiliation subgroup, or a member thereof, the store can hold more sales throughout the year, which not only results in stable sales totals, but also facilitates stock management. Furthermore, this serves as an incentive and an engine for groups and individual customers.

It is possible to schedule the bargain sales described above at several associated outlets or across a group of businesses. For example, they may be provided to all of the customers in an outlet chain C, so that, in January a bargain sale is held at store C1 of the outlet chain C, in February at store C2, and in March at store C3.

Alternatively, for example, customers from an affiliation group A can participate in a bargain sale at store D in January, at chain outlet E in February, and at business F in March.

The discount rate (award rate) is set so as to maintain profits for the store in response to the purchasing performance of the affiliation group, whereby the store can avoid risk. Furthermore, it is possible to predict trends in variations in sales figures and automatically vary the discount rate (award rate), or automatically vary a coefficient within an affiliation group or at participating outlets or throughout allied businesses, so that the difference between the maximum number of customers and minimum number of customers is stable. In this case, when one wishes to change the profit at an outlet, or the difference between customer discount rates, it is possible to automatically recalculate the coefficient by inputting a new figure. By these means, it is possible to calculate the discount rate (award rate) based on sales predictions that will produce a stable profit at an outlet or the like.

Furthermore, the discount rate is further established for individual outlets or for individual stores or businesses; all the customers for a given outlet or business group, or the like, may be established as one group. The discount is established so as to be applied to all of the customers of an outlet or business or the like, according to the corresponding sales totals for an entire outlet, or the sales total for all the outlets in a retail business, or the sales totals for an entire business group, or the like. One example is a setup whereby the customers of all the outlets of a business G are treated as one group, and if the sales for all the outlets increase twofold, a 20% discount is given to the customers.

Furthermore, this is advantageous in that it is possible to check the discount rate from customer terminals, and the like, that are connected to the Internet, or terminals provided at an outlet of a store, and announce that ranking, such as a discount rate, will be increased if slightly more purchases are made.

Moreover, it is possible to manage the monetary amounts for the sales performance of each group, each subgroup, or each individual, in the database. By these means, it is possible for an individual to verify their own current discount rate in real time. It is also possible to perform simulations for how many more purchases are necessary for an increase in the discount rate, or how much longer one must purchase before one's rank goes up or, for example, that it is possible to maintain one's rank by making a purchase every six months; and making use of such data is effective in increasing the desire to make purchases.

in addition, while this is not specifically shown in the drawing, by storing data, such as discount rate adjustments, according to the time at which a point transaction is made or when the points are used, this data can be used for seasonal discount promotional campaigns; and various other data can also be stored.

Furthermore, various different associations can be made by using a relational database for the data structure, and it is therefore a matter of course that data structures other than those shown in the drawings can be used.

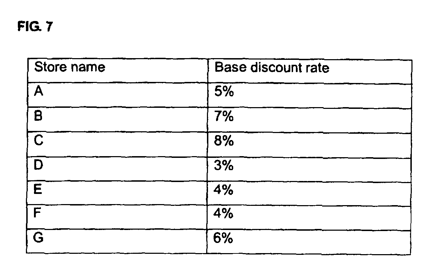

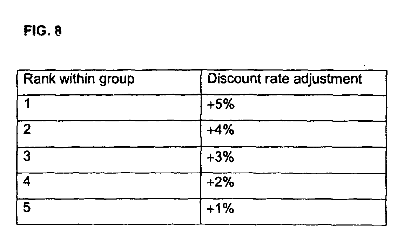

Moreover, as shown in the table for discount rates by store, in FIG. 7, that data may be a basic discount rate for each store or, as shown in the table for adjustment of discount rates by rank within the group, in FIG. 8, the data may be adjustment data for the discount rate, which is established for each rank within the group.

Furthermore, the data may be established so that, if the goods, etc., are to be delivered, the discount rate changes depending upon whether the delivery deadline is urgent, on whether or not the day and time is specified, on the delivery location and the delivery method, and the like.

The characteristics of a system that assigns a rank to each individual customer in a group when affiliation groups and affiliation subgroups are provided in this manner are described.

For example, the person at the top of an affiliation group may be dissatisfied in that the ranking of the average purchasing amounts for the group are made lower by a person with poor purchasing performance, but this can also be seen as an advantage in that the presence of this person increases the number of people in the group. For a person in the middle, the presence of this person can be seen as meaning that their individual ranking is not at the lowest level.

A balance is achieved wherein, even if one is affiliated with a group that has good performance in terms of obtaining a high discount rate (award rate) due to the efforts of that group alone, if their purchasing amounts are small, the individual's ranking within the group will be lower, so the award rate will be lower.

Furthermore, for people who are not able to create groups, and so create a one-person group, it is possible to maintain the award rate to a certain extent by increasing purchasing amounts.

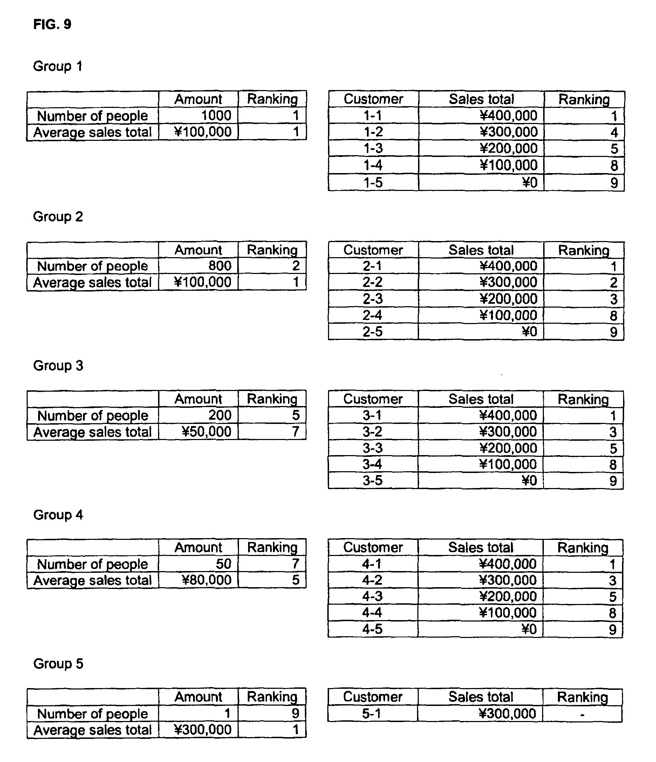

FIG. 9, FIG. 10, and FIG. 11 show examples of calculations of discount rates (award rates) based on data formats other than those described above, which are stored on the server system for the purpose of calculating discount rates (award rates) based on group purchasing performance, individual purchasing performance, and the like.

In FIG. 9, an example is shown wherein, in the case of a plurality of groups, the ranking is calculated both according to the number of people in the group and according to the average sales totals for the group, while rankings are calculated for individuals within each affiliation group, and rankings are changed as a result of database tabulations.

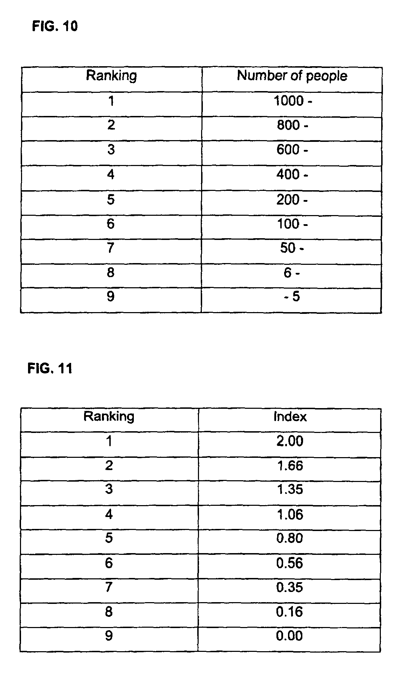

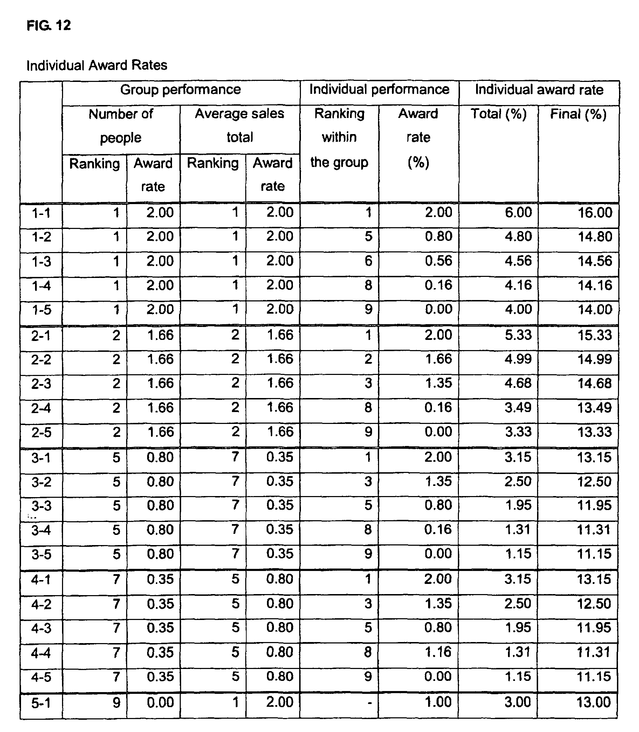

FIG. 10 shows an example of a standard for calculating ranking according to the number of people in an affiliation group; FIG. 11 shows an example of a calculation of a base index for award rates, such as discount rates based on ranking; if the base index is y and the ranking is x, this is calculated as:

$$y = 0.0125 \, x^2 - 0.375 \, x + 2.363$$

Ranking is calculated as the relationship between the number of people in each affiliation group, the average sales figures for the group, and the individual performance within the group, so that award rates, such as discounts, can be calculated; an example of this is shown in FIG. 12.

In FIG. 12, even if the performances for the group are poor, if the ranking within the group is high, the award rate will be higher than that of a person affiliated with a high position group; furthermore, even if the number of people in a group is small, if the average sales figures for that group are high, this can compensate. This shows that, even if there is one affiliate in a group, if the sales figures are high, the award rate is higher than that for affiliation with a group having many members, and there is no influence from poorly performing people in the group.

When the discount rate ranking for an affiliation group or an affiliation subgroup, or the ranking of a person within a group or a subgroup is determined, this can be determined according to various measurements, such as the absolute monetary value for purchasing performance, the absolute monetary value for purchasing performance for a person, relative position, etc., or combinations of these measurements.

In Fig 3, when the information storage medium 15 is inserted into the information reader 10 (S1), processing begins according to the flow chart in FIG. 3; in step S2, the magnetic data on this information storage medium 15 is read. Thereafter, when the monetary amount of the client purchase is input by way of a keyboard 11 in the information reading means 10 installed at the outlet or the like (S3), the client information, such as the client ID that was read and monetary sales amount data that was input in S3, is sent to the server system by way of a communications circuit (S4), and points are calculated according to the base discount rate for that store, corresponding to that monetary amount.

Alternatively, when the monetary amount of the customer purchase is input by way of the keyboard 11 in the data reading means 10 that is installed at the outlet or the like (S3), the points are automatically calculated according to a base discount rate for the store, corresponding to the monetary amount in accordance with a computer program installed beforehand in a microcomputer; customer information, such as the customer ID which was read and monetary sales amount information which were input in S3, is sent to the server system by way of a communications circuit (S4), and one proceeds to the next step.

Note that purchases and things to which the resulting discount may be applied include not only products purchased in a store or online store, but also to service charges, various handling fees, Internet connection fees, and various other usage fees, communication fees, shipping fees, various insurance fees, online software, music data, and the like. Furthermore, this may be applied to loan interest rates and deposit interest rates at financial institutions.

Next, in step 5, data, such as the affiliation group and the discount rate which have already been stored on the server system, is referenced (S5), and points are calculated (S6).

More specifically, the point balance, etc., is extracted from the customer information, such as the customer ID that was sent by referencing the table for customer information.

Next, the table for customer affiliation groups is referenced, an association is made with the customer ID, each customer is checked for affiliation groups, if an affiliation group exists, the discount rate is referenced by referencing the table for discount rates by affiliation group, and the points are calculated.

Next, whether or not an affiliation subgroup is present is checked, and if there is one, the discount rate is referenced by referencing the table for discount rates by affiliation group, and the points are calculated.

Next, if there is ranking within the groups, that data is referenced, and the discount rate for the point calculation is adjusted.

In terms of the discount rate by store, this may be calculated on the information reading means side, as described above, or this may be calculated by referencing the table for discount rates by store on the server system side.

Here, a number of different variations can be used for the table for discount rates by affiliation group and the table for a discount rate by store.

One example is the case wherein awards, such as discount rates, are made in common for other allied businesses or for multiple outlets. An example is that, wherein awards are received according to discount rates, such as in the examples shown in FIG. 13, even if, as shown in FIG. 13, this represents the first purchase in an allied store or the like, for a customer with existing purchasing performance in another allied store or the like. With such an arrangement, the customer can purchase products and the like at allied outlets and businesses. The discount applied at the ally may be established for each ally or may be universal. Furthermore, the discount rate may vary according to purchasing performance.

Furthermore, the discount rate can be increased, and the awards can be made larger by making transactions, such as purchases at several allied businesses or allied outlets or the like, rather than at one outlet. An example is a mode wherein a customer who has transactions at a store A and a business B has a larger discount rate than a customer who has transactions only at the store A.

Based on the number of points, etc., calculated in this manner, the customer point balance (sum total remainder) is updated in the server system (S7), and if the point balance data is also stored in the magnetic card or other information storage medium, the data is sent by way of the communications circuit after updating with the information reading means 10, so that the magnetic card or the like is updated (S8). and processing terminates (S9).

Note that, normally, if points are calculated according to discount information established for each affiliation group/affiliation subgroup, as in the invention recited in daim 5, when purchases or the like are made, and points are added, the discount information set for each affiliation group that is stored in the server system is referenced, and the number of points to be added is varied accordingly.

For example, the processing is such that, if the number of points to be added for a monetary sales amount at a certain store were 100, 110 points would be added for an affiliation group A (discount rate 10%), and 105 points would be added for affiliation group B (discount rate 5%).

Meanwhile, the process for calculating points according to the discount information established for each affiliation group/affiliation subgroup, as in the invention as recited in claim 6, may be such that, when points are used in a purchase or the like, the customer information stored in the server system and the discount information established for each affiliation group is referenced, and the discount is calculated for the number of points used.

For example, if the number of points to be used for a purchase amount at a certain store is 100, the calculation is such that for affiliation in Group A (discount rate 10%), 90 points would be subtracted from the sum total points, and for affiliation group B (discount rate 5%), 95 points would be subtracted from the sum total points.

Furthermore, for example, when the point card or other information storage medium is read, by connecting with the cash register terminal of the store or the like, the discount for the purchase or the number of points used for the purchase (or the number of points remaining) can be displayed on the cash register, and this may be printed on the receipt, which is a preferred mode when used in a store.

Furthermore, in addition to adding points, discount modes include such various modes as giving coupons, giving cash vouchers, or giving product vouchers, as well as discount vouchers and cash back or combinations thereof.

Furthermore, in terms of modes of adding points and the like, in addition to adding points when a purchase is made, the addition may be made when a reservation is made, or the addition may be made when a contract is concluded, promising to purchase in the future.

Alternatively, points may be added or the discount rate may be increased when a new customer (member) is introduced or when a customer who has been introduced makes a purchase, or the like, once, or up to a predetermined number of times, or over a fixed period of time, or permanently.

Next another mode of embodiment of the present invention will be described.

This is a system using information transmission and reception over a computer network, as represented by the invention recited in claim 3.

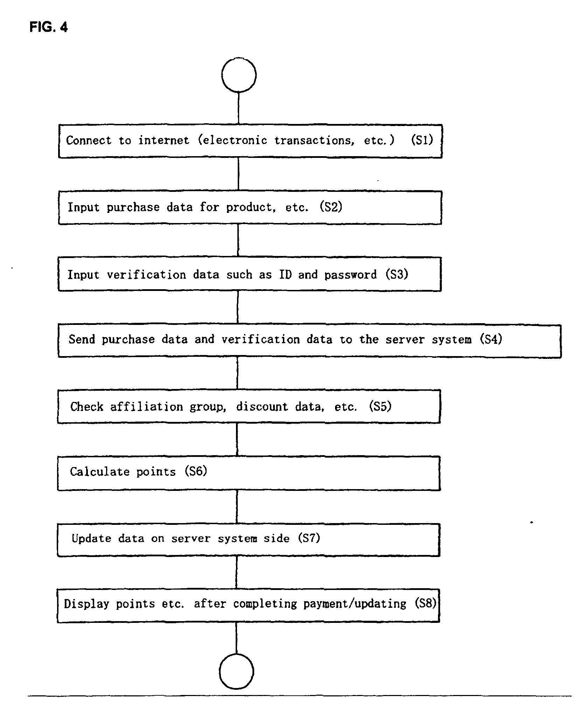

FIG. 4 is a point system, as represented by the invention recited in claim 1, wherein, when customer information is sent over a computer network from a customer terminal and used in an electronic commercial transaction, information stored on a server system that manages customer information and point information is read, a sum total of points is rerecorded according to a monetary purchase amount, and the data stored on the storage medium is tabulated and used for display or printing so that the information can be used as necessary in various sales services.

In this case, the server system is accessed using customer terminals 1 and 2, and information is sent, allowing this to be implemented without an information reading means 10 or an information storage medium 15, such as a point card.

In FIG. 4, access is made to a website on which electronic transactions and the like are performed over the internet or the like from customer terminals (S1); purchase requests for products and the like are made, and payment methods, delivery methods, and the like are verified by way of data sent by the customer (S2).

In this case, the information is sent to a web server or the like for an electronic store that performs electronic transactions, but the electronic store cooperates with the server system of the present invention so as to allow data to be sent and received in order to use the system of the present invention.

The customer inputs authentication data, such as a customer ID and a password, in order to use the point system of the present invention (S3); the customer information, such as the customer ID and the purchase amount data, which is input at the electronic store (S2), is sent to the server system by way of communication circuits (S4); and point numbers are calculated according to the base discount rate for that store for that monetary amount.

Next, in step S5, data, such as the affiliation group, the discount rate, etc., which has already been stored on the server system side, is referenced (S5), and points are calculated (S6).

More specifically, the table for customer information is referenced based on customer information that has been sent, such as customer ID, and the point balance is extracted.

Next, the table for customer affiliation groups is referenced, an association is made with the customer ID, each customer is checked for existing affiliation groups, and if there is one, the discount rate is referenced by referencing the table for discount rates by affiliation groups, and the points are calculated.

Next, whether or not an affiliation subgroup is present is checked, and if an affiliation subgroup exists, the discount rate is referenced by referencing the table for discount rates by affiliation group, and the points are calculated.

Next, if there is ranking within the groups, that data is referenced, and the discount rate for the point calculation is adjusted.

In terms of the discount rate by electronic store, this may be calculated on the store's web server side, or this may be calculated by referencing the table for discount rates by electronic store on the server system side.

The customer point balance (sum total remainder) are updated on the server system (S7) based on the number of points calculated in this manner; the point balance information is sent to the customer terminal via the communication circuit, this is displayed on the customer's terminal screen, or the like, and the processing terminates (S8).

Furthermore, in another embodiment of the present invention, as in the invention recited in claim 9, the point system is characterized in that, in the invention as recited in claims 1-8, the points comprise normal points added when purchases or the like are made, and stock points that can be purchased in exchange for money or the like.

For stock point purchases, if these are made at an outlet or the like, and the point balance data is stored on the information storage medium itself, the points that were purchased can be added with the information reading means 10.

Furthermore, when the point balance data is stored on the server system, the server system is accessed from the information reading means 10 via the communication circuits, and the purchase points are sent and added.

Furthermore, in another embodiment of the present invention, as in the invention recited in claim 10, the point system is characterized in that, this is the points system as recited in any one of claims 1-9 wherein, in the invention as recited in claims 1-9, interest points are added to the points according to the period of time over which points are held or the number of points held. In this case, interest is calculated by automatically applying a predetermined rate to balances at each time-based calculation scale, such as daily or once a month, from the server system side, for point balances. As a variation on this mode, the discount rate may be increased according to the time period over which points are held, the number of points held, or the like.

Furthermore, when the point system is used in electronic commercial transactions made from a customer terminal over the internet or the like, an ID and a password are used for the customer information in the example described above; as in the invention as recited in claim 14, the storage medium can be a authentication means provided in the customer terminal when the customer information is sent over the computer network from the customer terminal to utilize an electronic commercial transaction.

Specifically, this is an information storage medium storing an ID and a password, or authentication data using an electronic signature, a private key, or a public key or the like; the information storage medium is a floppy disk, a PCMCIA card, a USB key, or any type of card having a memory function, or the like.

INDUSTRIAL APPLICABILITY

As described in detail above, according to the present invention, a point system is provided, wherein affiliation groups comprising a plurality of customers are provided, and discount information is established, which is established for individual affiliation groups, whereby discount information, such as discount rates, can be established in advance based on the purchasing performance of the affiliation groups and the like, or discount rates or the like can be varied according to variations in purchasing performance, and points can be calculated according to the discount information.

Furthermore, by adopting a system wherein points are accumulated, not only is this advantageous for the consumer in that discounts and the like can be obtained, but because of an operation whereby points cannot be used until a fixed amount has been accumulated, this is advantageous for the store in that it is useful in terms of cash flow and the like.

Furthermore, as the present invention allows for setting and varying discount rates so as to maintain the profit ratio of outlets and enterprises, while with conventional sales promotions it was only possible to make predictions, such as: If we discount by this much, we are likely to increase sales by that much, and thus there was a possibility that profits would not ultimately be increased; with the present invention discounts are made while maintaining profit, so that profits are always increased.

**Claims**

1. A point system wherein, a card, or another information storage medium for storing customer information and point information, is used, and when this is used, said information is read using an information reading means, a sum total of points is rerecorded according to a monetary purchase amount, and the data stored on the storage medium is tabulated and used for display or printing so that the information can be used as necessary in various sales services, the point system being **characterized in that**:

   customer information comprising information for individual single customers and information for individual affiliation groups comprising a plurality of customers; and
   discount information established for individual stores or products and for individual affiliation groups
   are stored on a server system provided on a computer network connected to said information reading means; and
   when said information is read by the information reading means, points are calculated according to said discount information established for individual stores or products and individual affiliation groups.

2. The point system of claim 1, **characterized in that**, in the invention as recited in claim 1,
   said point information is stored in said server system, in addition to the card or other information storage medium.

3. A point system wherein, when customer information is sent over a computer network from a customer terminal and used in an electronic commercial transaction, information stored on a server system that manages customer information and point information is read, a sum total of points is rerecorded according to a monetary purchase amount, and the data stored on the storage medium is tabulated and used for display or printing so that the information can be used as necessary in various sales services, the point system being **characterized in that**:

   customer information comprising information for individual single customers and information for individual affiliation groups comprising a plurality of customers; and
   discount information established for individual stores or products and for individual affiliation groups
   are stored on said server system; and
   when said information is read by an information reading means, points are calculated according to said discount information established for individual stores or products and affiliation individual groups.

4. The point system of any one of claims 1-3, **characterized in that**, in the invention as recited in claims 1-3:

   within said customer information, the information for individual affiliation groups comprising a plurality of customers comprises information for individual subgroups comprising members of the affiliation group; and
   when said information is read by the information reading means, points are calculated according to said discount information established for individual stores or products and individual affiliation groups/affiliation subgroups.

**5.** The point system of any one of claims 1-4, **characterized in that**, in the invention as recited in claims 1-4:

processing that calculates points according to said discount information established for individual affiliation groups/affiliation subgroups is such that:

when points are added, calculations are performed for point addition, referencing the discount information established for individual affiliation groups stored on said server system, and a sum total of points is rerecorded according to the monetary purchase amount.

**6.** The point system of any one of claims 1-5, **characterized in that**, in the invention as recited in claims 1-5:

processing that calculates points according to said discount information established for individual affiliation groups/affiliation subgroups is such that:

when points are used to make purchases or the like, a discount on the number of points used is calculated, referencing the customer information and the discount information established for individual affiliation groups stored on said server system, and a sum total of points is rerecorded according to the monetary purchase amount.

**7.** The point system of any one of claims 1-6, **characterized in that**, in the invention as recited in claims 1-6:

the information stored on said server system comprises ranking information for individual customers within said affiliation group or within said affiliation subgroup.

**8.** The point system of any one of claims 1-7, **characterized in that**, in the invention as recited in claims 1-7:

the information stored on said server system comprises discount information established for individual point acquisition periods or point usage periods.

**9.** The point system of any one of claims 1-8, **characterized in that**, in the invention as recited in claims 1-8:

said points comprise normal points added when purchases or the like are made and stock points that can be purchased in exchange for money or the like.

**10.** The point system of any one of claims 1-9, **characterized in that**, in the invention as recited in claims 1-9:

interest points are added to said points according to the period of time over which points are held, the number of points held or the like.

**11.** The point system of any one of claims 1-10, **characterized in that**, in the invention as recited in claims 1-10:

said points can be added or used at a plurality of stores using the point system of the present invention.

**12.** The point system of any one of claims 1-11, **characterized in that**, in the invention as recited in claims 1-11:

said customer information, comprising information for individual single customers and information for individual affiliation groups/affiliation subgroups, comprising a plurality of customers, is stored on a storage medium held by the customer.

**13.** The point system of any one of claims 1-12, **characterized in that**, in the invention as recited in claims 1-12:

said storage medium is a magnetic card.

**14.** The point system of any one of claims 1-13, **characterized in that**, in the invention as recited in claims 3-13:

said storage medium is a authentication means provided at the customer terminal when the customer information is sent over the computer network from the customer terminal to utilize an electronic commercial transaction.

**FIG. 1**

**FIG. 2**

**FIG. 3**

```
                    ( )
                     |
  ┌──────────────────────────────────────────────┐
  │ Insert information storage medium             │
  │ (magnetic card, etc.) (S1)                    │
  └──────────────────────────────────────────────┘
                     |
  ┌──────────────────────────────────────────────┐
  │ Read magnetic data (S2)                       │
  └──────────────────────────────────────────────┘
                     |
  ┌──────────────────────────────────────────────┐
  │ Input purchase amount data (S3)               │
  └──────────────────────────────────────────────┘
                     |
  ┌──────────────────────────────────────────────────────┐
  │ Send customer information and purchase amount data to  │
  │ server system (S4)                                     │
  └──────────────────────────────────────────────────────┘
                     |
  ┌──────────────────────────────────────────────┐
  │ Check affiliation group, discount data, etc. (S5) │
  └──────────────────────────────────────────────┘
                     |
  ┌──────────────────────────────────────────────┐
  │ Calculate points (S6)                         │
  └──────────────────────────────────────────────┘
                     |
  ┌──────────────────────────────────────────────┐
  │ Update data on server system side (S7)        │
  └──────────────────────────────────────────────┘
                     |
  ┌──────────────────────────────────────────────┐
  │ Update magnetic data (S8)                     │
  └──────────────────────────────────────────────┘
                     |
  ┌──────────────────────────────────────────────┐
  │ Eject information storage medium (S9)         │
  └──────────────────────────────────────────────┘
                     |
                    ( )
```

**FIG. 4**

Connect to internet (electronic transactions, etc.) (S1)

Input purchase data for product, etc. (S2)

Input verification data such as ID and password (S3)

Send purchase data and verification data to the server system (S4)

Check affiliation group, discount data, etc. (S5)

Calculate points (S6)

Update data on server system side (S7)

Display points etc. after completing payment/updating (S8)

**FIG. 5**

| Customer ID | Name | Affiliation group | Affiliation subgroup | Rank within group |
|---|---|---|---|---|
| 00001 | OOOO | A | Aa | - |
| 00002 | OOOO | B | Ba | 2 |
| 00003 | OOOO | A | Ab | 2 |
| 00004 | OOOO | C | Cb | 1 |
| 00005 | OOOO | D | Da | |
| 00006 | OOOO | D | - | |
| 00007 | OOOO | C | Cb | 3 |

**FIG. 6**

| Affiliation group | Affiliation subgroup | Discount rate |
|---|---|---|
| A | Aa | 5% |
| A | Ab | 7% |
| A | Ac | 8% |
| B | Ba | 3% |
| B | Bb | 4% |
| C | Ca | 4% |
| C | Cb | 6% |

**FIG. 7**

| Store name | Base discount rate |
|------------|--------------------|
| A | 5% |
| B | 7% |
| C | 8% |
| D | 3% |
| E | 4% |
| F | 4% |
| G | 6% |

FIG. 8

| Rank within group | Discount rate adjustment |
|---|---|
| 1 | +5% |
| 2 | +4% |
| 3 | +3% |
| 4 | +2% |
| 5 | +1% |

**FIG. 9**

Group 1

|  | Amount | Ranking |
|---|---|---|
| Number of people | 1000 | 1 |
| Average sales total | ¥100,000 | 1 |

| Customer | Sales total | Ranking |
|---|---|---|
| 1-1 | ¥400,000 | 1 |
| 1-2 | ¥300,000 | 4 |
| 1-3 | ¥200,000 | 5 |
| 1-4 | ¥100,000 | 8 |
| 1-5 | ¥0 | 9 |

Group 2

|  | Amount | Ranking |
|---|---|---|
| Number of people | 800 | 2 |
| Average sales total | ¥100,000 | 1 |

| Customer | Sales total | Ranking |
|---|---|---|
| 2-1 | ¥400,000 | 1 |
| 2-2 | ¥300,000 | 2 |
| 2-3 | ¥200,000 | 3 |
| 2-4 | ¥100,000 | 8 |
| 2-5 | ¥0 | 9 |

Group 3

|  | Amount | Ranking |
|---|---|---|
| Number of people | 200 | 5 |
| Average sales total | ¥50,000 | 7 |

| Customer | Sales total | Ranking |
|---|---|---|
| 3-1 | ¥400,000 | 1 |
| 3-2 | ¥300,000 | 3 |
| 3-3 | ¥200,000 | 5 |
| 3-4 | ¥100,000 | 8 |
| 3-5 | ¥0 | 9 |

Group 4

|  | Amount | Ranking |
|---|---|---|
| Number of people | 50 | 7 |
| Average sales total | ¥80,000 | 5 |

| Customer | Sales total | Ranking |
|---|---|---|
| 4-1 | ¥400,000 | 1 |
| 4-2 | ¥300,000 | 3 |
| 4-3 | ¥200,000 | 5 |
| 4-4 | ¥100,000 | 8 |
| 4-5 | ¥0 | 9 |

Group 5

|  | Amount | Ranking |
|---|---|---|
| Number of people | 1 | 9 |
| Average sales total | ¥300,000 | 1 |

| Customer | Sales total | Ranking |
|---|---|---|
| 5-1 | ¥300,000 | - |

**FIG. 10**

| Ranking | Number of people |
|---------|------------------|
| 1 | 1000 - |
| 2 | 800 - |
| 3 | 600 - |
| 4 | 400 - |
| 5 | 200 - |
| 6 | 100 - |
| 7 | 50 - |
| 8 | 6 - |
| 9 | - 5 |

**FIG. 11**

| Ranking | Index |
|---------|-------|
| 1 | 2.00 |
| 2 | 1.66 |
| 3 | 1.35 |
| 4 | 1.06 |
| 5 | 0.80 |
| 6 | 0.56 |
| 7 | 0.35 |
| 8 | 0.16 |
| 9 | 0.00 |

**FIG. 12**

Individual Award Rates

| | Group performance | | | | Individual performance | | Individual award rate | |
|---|---|---|---|---|---|---|---|---|
| | Number of people | | Average sales total | | Ranking within the group | Award rate (%) | Total (%) | Final (%) |
| | Ranking | Award rate | Ranking | Award rate | | | | |
| 1-1 | 1 | 2.00 | 1 | 2.00 | 1 | 2.00 | 6.00 | 16.00 |
| 1-2 | 1 | 2.00 | 1 | 2.00 | 5 | 0.80 | 4.80 | 14.80 |
| 1-3 | 1 | 2.00 | 1 | 2.00 | 6 | 0.56 | 4.56 | 14.56 |
| 1-4 | 1 | 2.00 | 1 | 2.00 | 8 | 0.16 | 4.16 | 14.16 |
| 1-5 | 1 | 2.00 | 1 | 2.00 | 9 | 0.00 | 4.00 | 14.00 |
| 2-1 | 2 | 1.66 | 2 | 1.66 | 1 | 2.00 | 5.33 | 15.33 |
| 2-2 | 2 | 1.66 | 2 | 1.66 | 2 | 1.66 | 4.99 | 14.99 |
| 2-3 | 2 | 1.66 | 2 | 1.66 | 3 | 1.35 | 4.68 | 14.68 |
| 2-4 | 2 | 1.66 | 2 | 1.66 | 8 | 0.16 | 3.49 | 13.49 |
| 2-5 | 2 | 1.66 | 2 | 1.66 | 9 | 0.00 | 3.33 | 13.33 |
| 3-1 | 5 | 0.80 | 7 | 0.35 | 1 | 2.00 | 3.15 | 13.15 |
| 3-2 | 5 | 0.80 | 7 | 0.35 | 3 | 1.35 | 2.50 | 12.50 |
| 3-3 | 5 | 0.80 | 7 | 0.35 | 5 | 0.80 | 1.95 | 11.95 |
| 3-4 | 5 | 0.80 | 7 | 0.35 | 8 | 0.16 | 1.31 | 11.31 |
| 3-5 | 5 | 0.80 | 7 | 0.35 | 9 | 0.00 | 1.15 | 11.15 |
| 4-1 | 7 | 0.35 | 5 | 0.80 | 1 | 2.00 | 3.15 | 13.15 |
| 4-2 | 7 | 0.35 | 5 | 0.80 | 3 | 1.35 | 2.50 | 12.50 |
| 4-3 | 7 | 0.35 | 5 | 0.80 | 5 | 0.80 | 1.95 | 11.95 |
| 4-4 | 7 | 0.35 | 5 | 0.80 | 8 | 1.16 | 1.31 | 11.31 |
| 4-5 | 7 | 0.35 | 5 | 0.80 | 9 | 0.00 | 1.15 | 11.15 |
| 5-1 | 9 | 0.00 | 1 | 2.00 | - | 1.00 | 3.00 | 13.00 |

### INTERNATIONAL SEARCH REPORT

| International application No. |
|---|
| PCT/JP01/11071 |

A. CLASSIFICATION OF SUBJECT MATTER
Int.Cl$^7$   G06F17/60

According to International Patent Classification (IPC) or to both national classification and IPC

B. FIELDS SEARCHED

Minimum documentation searched (classification system followed by classification symbols)
Int.Cl$^7$   G06F17/60

Documentation searched other than minimum documentation to the extent that such documents are included in the fields searched
| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-293740 A (Hitachi, Ltd.), 20 October, 2000 (20.10.2000), Full text; Figs. 1 to 16 (Family: none) | 1-14 |
| Y | Shin Tenkai, "Point Card no aratanaru Senryaku", Card Wave, Kabushiki Kaisha C-Media, 10 October, 1999 (10.10.1999), Vol.12, No.11, pp.10-29 | 1-14 |
| Y | JP 2000-305984 A (Hitachi, Ltd.), 02 November, 2000 (02.11.2000), Full text; Figs. 1 to 22 (Family: none) | 1-14 |
| A | JP 3047956 U (Yasuda Shintaku Ginko K.K.), 12 February, 1998 (12.02.1998), Full text; Figs. 1 to 6 (Family: none) | 1-14 |

| ☒ Further documents are listed in the continuation of Box C. | ☐ See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 January, 2002 (28.01.02) | 12 February, 2002 (12.02.02) |

| Name and mailing address of the ISA/ Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP01/11071

C (Continuation).  DOCUMENTS CONSIDERED TO BE RELEVANT

| Category* | Citation of document, with indication, where appropriate, of the relevant passages | Relevant to claim No. |
|---|---|---|
| A | JP 11-345372 A (Kabushiki Kaisha M and C System), 14 December, 1999 (14.12.1999), Full text; Figs. 1 to 4 (Family: none) | 1-14 |
| A | Jun HONDA, "Network Community Creation: Josei Community Ashiba ni Kigyo no Hanbai Senryaku wo Shien", Nikkei Net Business, 15 October 1999 (15.10.1999), Vol.52, pp.106-108 | 1-14 |

Form PCT/ISA/210 (continuation of second sheet) (July 1992)